Europäisches Patentamt

European Patent Office

Office européen des brevets

(19)

(11) Veröffentlichungsnummer: 0 200 679
A1

# (12) EUROPÄISCHE PATENTANMELDUNG

(21) Anmeldenummer: 86810159.3

(22) Anmeldetag: 04.04.86

(51) Int. Cl.⁴: A 22 C 11/06

(30) Priorität: 02.05.85 CH 1872/85

(43) Veröffentlichungstag der Anmeldung:
05.11.86 Patentblatt 86/45

(84) Benannte Vertragsstaaten:
AT BE CH DE FR GB IT LI LU NL SE

(71) Anmelder: Hoegger Alpina AG
Ringstrasse
CH-9202 Gossau(CH)

(72) Erfinder: Trottmann, Bruno
Fliederstrasse 14
CH-9202 Gossau(CH)

(72) Erfinder: Geissbühler, Hans
Sonnenbergstrasse 14
CH-9524 Zuzwil(CH)

(74) Vertreter: White, William et al,
Isler AG Patentanwalts-Bureau Walchestrasse 23
CH-8006 Zürich(CH)

(54) Kolbenfüller.

(57) Vom Kolbenfüller ist nur der Oelzylinder (10), der Oelkolben (11) und der Brätkolben (51) dargestellt. Der Oelkolben (11) ist als Hohlzylinder ausgebildet und weist in seiner flanschartigen Bodenpartie (13) ein Kolbenventil (30) auf, durch das die beiden Zylinderkammern (20, 21) verbindbar sind. Der Brätkolben (51) ist mittles einer Nut und einem Führungsnocken an einem Zentrierflansch (50) am Kolben (11) verbunden. Durch einem mit dem Ventilkolben (32) verbundenen Stössel (53) wird die richtige Lage des Brätkolbens (51) auf dem Zentrierflansch (50) kontrolliert. Bei unrichtiger Lage werden beide Zylinderkammern (20, 21) durch das Kolbenventil (30) miteinander verbunden und der Kolben (11) kann nicht mit hydraulischem Druck verstellt werden. Vorteilhafterweise kann somit der Brätkolben (51) ohne Befestigungsmittel im Brätraum in richtiger Lage gehaltert werden und zum Reinigen lässt er sich leicht und ohne Werkzeuge herausnehmen, wodurch eine äusserst hygienische Reinlichkeit gewährleistet werden kann.

EP 0 200 679 A1

Fig. 1

0200679
Hoegger Alpina AG

Kolbenfüller

Die vorliegende Erfindung betrifft einen Kolbenfüller gemäss dem Oberbegriff des unabhängigen Patentanspruchs 1.

Bei Kolbenfüllern zum kontinuierlichen Füllen von Därmen mit Brät für die Herstellung von Würsten, wird das Brät in einen Zylinder eingefüllt und durch einen Kolben mit konstantem Druck durch ein Füllrohr gepresst. Ueber das Ende des Füllrohres ist ein langer Darm oder eine Wursthaut aufgezogen und diese Haut wird dann, nachdem deren Ende verschlossen ist, kontinuierlich gefüllt und in konstant bleibenden Abständen abgebunden, um so einen Strang von Würsten zu bilden. Der Kolben hat in seiner Oberseite eine konische Ausnehmung beim Eingang zum Füllrohr, damit das Brät möglichst ohne Rest verwendet werden kann.

In bekannten, auf dem Markt befindlichen Kolbenfüllern, ist ein solcher Brätkolben mittels Schrauben auf einem Oeldruckkolben befestigt. Darüber hinaus sind noch Führungen vorzusehen, mit denen ein verdrehen des Brätkolbens vermieden wird. Es ist einfach einzusehen, dass solche, durch Schrauben bewirkte Vertiefungen sehr schwer hygienisch zu reinigen sind. Zum Herausnehmen solcher Kolben wird überdies ein besonderes Werkzeug benötigt.

Es ist deshalb eine Aufgabe der Erfindung diese Nachteile zu beheben und den Brätkolben ohne Benützung von Werkzeugen herausnehmbar und ortsgenau wieder einsetzbar zu bauen, dabei soll überdies eine Sicherheit vorhanden sein, durch die eine Kraftausübung bei unrichtig eingesetzem Brätkolben verhindert wird.

Erfindungsgemäss wird dies durch die Merkmale im kennzeichnenden Teil des unabhängigen Patentanspruchs 1 erreicht.

Nachfolgend wird die Erfindung anhand der Zeichnung näher erläutert. Es zeigen:

Fig. 1     eine Schnittansicht durch einen Oelzylinder eines Kolbenfüllers in einer axialen Schnittebene,

Fig. 2     eine Ansicht des Befestigungsflansches von der Linie II-II in Fig. 1 betrachtet, und

Fig. 3     eine Schnittansicht gemäss der Schnittlinie III-III in Fig. 2.

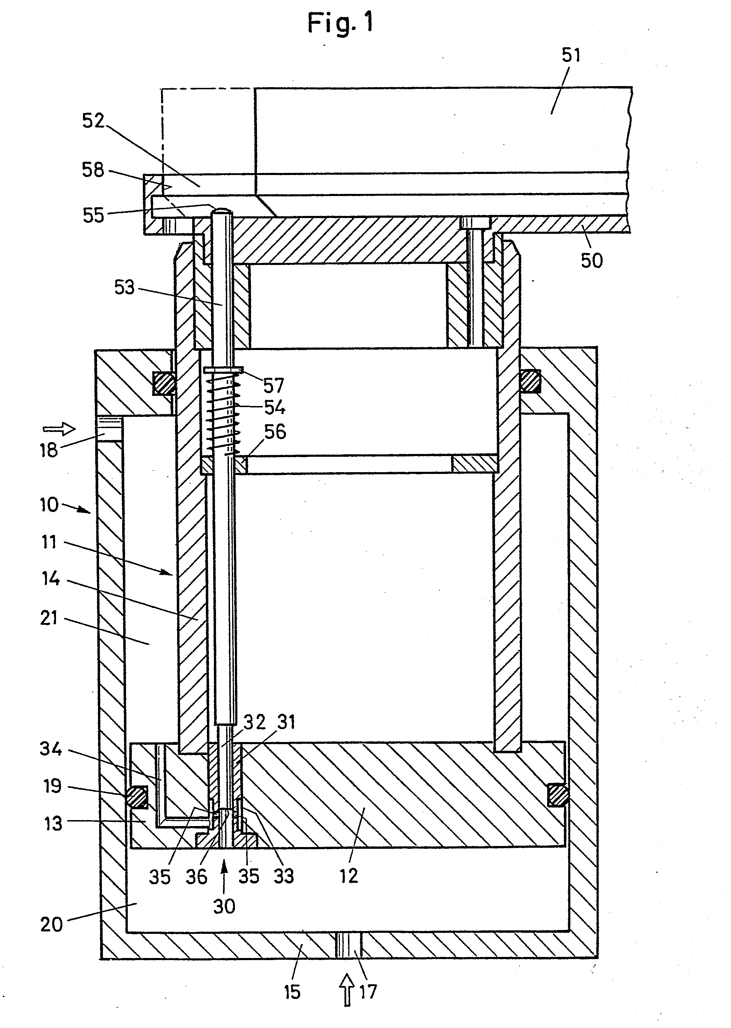

In Fig. 1 befindet sich im vereinfacht dargestellten Oelzylinder 10 ein Oelkolben 11. Dieser Oelkolben 11 ist ebenfalls als Hohlzylinder ausgebildet. Der Kolbenboden 12 trägt einen ringförmigen Flansch 13, in den die Zylinderwand 14 des Kolbens 11 dichtend eingesetzt und einstückig damit verbunden ist. In diesem Flansch 13 ist auch die Sicherheitssteuerung für das Druckfluid untergebracht, wie später zu beschreiben sein wird.

Im Boden 15 des Zylinders 10 ist eine erste Zufuhröffnung 17 und in der Wand desselben eine zweite Zufuhröffnung 18 angeordnet. In überlicher Weise befindet sich eine Ringdichtung 19 im unteren Teil des Kolbens 11 und gemäss der beschriebenen Anordnung ist die Aufnahmenut für diese Dichtung im Flansch 13 angeordnet.

Damit werden im Zylinder 10 eine untere Kammer 20 und eine obere Kammer 21 abgeteilt und die eine Zufuhröffnung 17 mündet in die untere Kammer 20 und die zweite Zufuhröffnung 18 mündet in die obere Kammer 21.

Im Flansch 13 befindet sich ein Kolbenventil 30 mit einer Ventilhülse 31 und einem Ventilkolben 32. Die Ventilhülse 31 weist aussenseitig eine rundumlaufende Nut 33 auf, die über eine Leitung 34 im Flansch 13 mit der oberen Kammer 21 kommuniziert. Radiale Bohrungen 35 in der Ventilhülse 31 münden in die Nut 33 und stellen eine Verbindung von der unteren Kammer 20 zu der Nut 33 her.

Wenn die ebenfalls vereinfacht dargestellte Steuerkante 36 des Ventilkolbens 32 die radialen Bohrungen 35 verdeckt, so ist der Durchgang zwischen den beiden Kammern geschlossen.

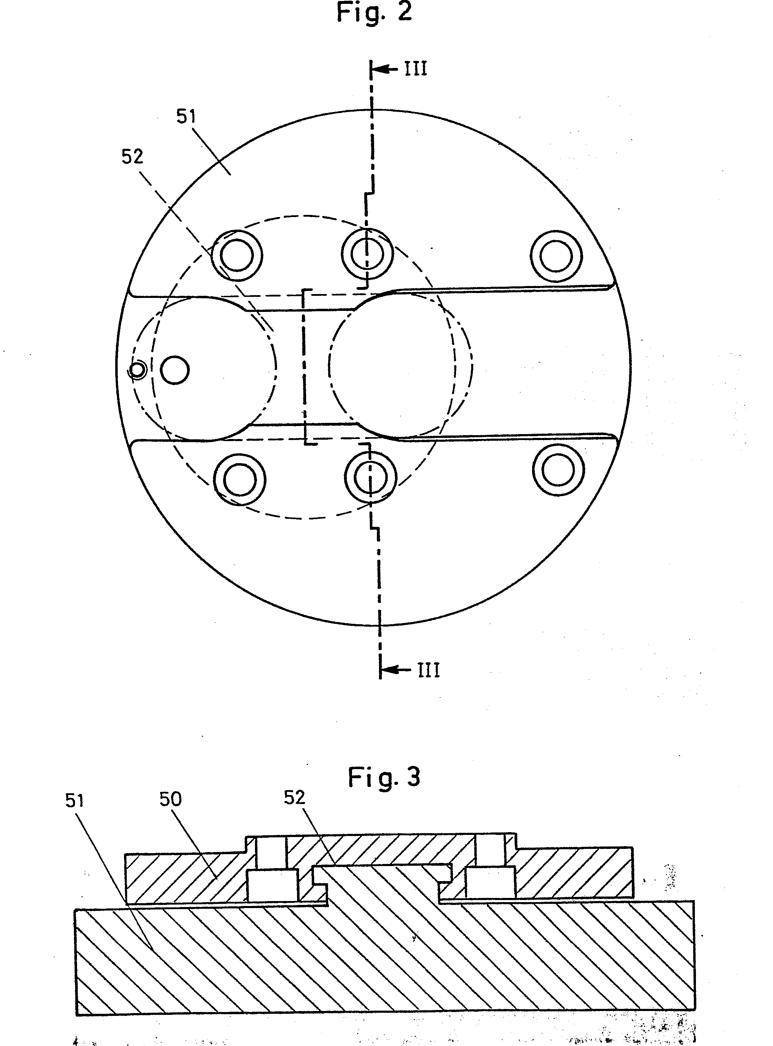

Der Zentrierflansch 50 ist gemäss Fig. 2 und 3 in erfindungswesentlicher Ausbildung mit einer T-förmigen Nut 52 versehen. In diese Nut 52 greift ein Führungsnocken des Brätkolbens 51 ein. In Fig. 1 ist der Brätkolben 51 mit ausgezogenen Linien in einer Stellung dargestellt, die einem Teil des gesamten geführten Weges des Führungsnockens in der Nut 52 entspricht. Der Brätkolben 51 ist somit nicht in der erforderlichen Lage.

0200679

Ein Stössel 53, der gemäss diesem Beispiel mit dem Ventilkolben 32 einstückig verbunden ist, steht unter der Wirkung einer Feder 54 mit seinem kalottenförmigen Ende 55
über die obere Fläche des Zentrierflansches 50 vor. Die
genannte Feder 54 ruht einerseits auf einem innenseitig
der Kolbenwand 14 angeordneten Ringflansch 56 und anderseits an einer einstückig mit dem Stössel 53 verbundenen
Scheibe 57 auf.

Der Zentrierflansch 50 weist ausserdem noch einen Anschlag
58 auf. Aus Fig. 1 ist leicht ersichtlich, dass wenn der
Brätkolben 51 in die strichliert gezeichnete Lage verschoben ist, die Flanke des Kolbens an diesem Anschlag anliegt
und ein nicht dargestellter Schaltnocken an der Unterseite
des Brätkolbens 51 liegt dann über der Kalotte 55 des
Stössels 53, wodurch dieser entgegen der Federkraft der
Feder 54 nach unten gedrückt wird.

Im Kolbenventil 30 hat dies zur Folge, dass bei über die
Oberfläche des Zentrierflansches 50 vorstehender Kalotte
55 die Steuerkante 36 des Ventilkolbens 32 die radialen
Durchgänge 35 in der Ventilhülse 31 freigibt, so dass unter Druck durch eine der beiden Oeffnungen 17, 18 einfliessendes Drucköl durch die Leitung 34 und die Ventilhülse 31
zur jeweils anderen Oeffnung gelangt, ohne dass der Kolben
11 bewegt würde. Erst wenn der Brätkolben 51 in seiner korrekten Lage ist, werden die Verbindungswege durch das Kolbenventil 30 zwischen oberer Kammer 21 und unterer Kammer 20 geschlossen und es kann ein Druck in der entsprechenden Kammer aufgebaut werden, um den Kolben 11 vorerst nach unten zu drücken.

Bei der Darstellung in Fig. 1 wurde auf die Angabe des Brätzylinders mit dem zur Herstellung der Würste benötigten Füllrohr verzichtet, weil diese Teile jedem Fachmann geläufig sind und an dieser Stelle nicht noch gesondert zu beschreiben sind.

Patentansprüche

1.        Kolbenfüller zum kontinuierlichen Füllen von Därmen mit Brät für die Herstellung von Wurstwaren, bei dem das Brät aus einem Zylinder mittels eines Kolbens in ein Füllrohr gepresst wird, dadurch gekennzeichnet, dass im Zylinder ein Brätkolben (51) in trennbarer Weise mit einem Oelkolben (11) verbunden ist, und dass Mittel (30, 53) vorhanden sind, um den korrekten Sitz des Brätkolbens (51) auf dem Oelkolben (11) festzustellen und bei unrichtigem Sitz den Betrieb zu verhindern.

2.        Kolbenfüller nach Patentanspruch 1, dadurch gekennzeichnet, dass am Oelkolben (11) ein Zentrierflansch (50) befestigt ist, und dass der Zentrierflansch (50) mit einer    Quernut (52) für einen Führungsnocken des Brätkolbens (51) versehen ist.

3.        Kolbenfüller nach Patentanspruch 1 oder 2, dadurch gekennzeichnet, dass im Zu- oder Ablaufweg des Drucköls ein vom Brätkolben (51) betätigtes Steuerorgan (30) vorhanden ist.

4.      Kolbenfüller nach Patentanspruch 3, dadurch gekennzeichnet, dass das Steuerorgan (30) ein axial in einer Ventilhülse (31) verschiebbarer Ventilkolben (32) ist, und dass der Ventilkolben (32) mit wenigstens einer Steuerkante (36) für den Verschluss eines über Bohrungen (35) und eine Ringnut (33) zugänglichen Weges (34) für das Drucköl, versehen ist.

## Fig. 1

Fig. 2

III

51

52

III

Fig. 3

51 50 52

**Europäisches Patentamt**

**EUROPÄISCHER RECHERCHENBERICHT**

0200679

Nummer der Anmeldung

EP 86 81 0159

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-C- 176 697 (GEBR. UNGER AG) * Seite 1, Zeilen 65-69; Figur * | 1 | A 22 C 11/06 |
| | --- | | |
| A | DE-C- 676 317 (ALEXANDER A. VON DER NAHMER AG) * Seite 1, Zeilen 36-38; Figur * | 1 | |
| | --- | | |
| A | DE-A-1 922 323 (M. BEILHACK, MASCHINENFABRIK UND HAMMERWERK GmbH) * Seite 1, Absatz 1; Seite 4, Absätze 3,4; Figur 3 * | 1 | |
| | --- | | |
| A | DE-B-1 243 980 (FRIESEKE & HOEPFNER GmbH) * Spalte 3, Zeilen 1-19; Figur * | 3,4 | |
| | ----- | | **RECHERCHIERTE SACHGEBIETE (Int. Cl.4)** |
| | | | A 22 C |

Der vorliegende Recherchenbericht wurde für alle Patentansprüche erstellt.

| Recherchenort DEN HAAG | Abschlußdatum der Recherche 12-08-1986 | Prüfer NEHRDICH H.J |
|---|---|---|